# EUROPEAN PATENT SPECIFICATION

(11) **EP 3 190 589 B1**
(45) Date of publication and mention of the grant of the patent: **24.03.2021**
(21) Application number: 15838221.8
(22) Date of filing: 07.07.2015
(51) Int. Cl.: G11B 20/10, G11B 20/12, G11B 27/32

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 03.09.2014 US 201462045206 P; 03.12.2014 US 201414559391
(43) Date of publication of application: 12.07.2017
(73) Proprietor: Sony Corporation, Tokyo 108-0075 (JP); Sony Pictures Entertainment Inc., Culver City, CA 90232 (US)
(72) Inventor: UCHIMURA, Kouichi, Tokyo 108-0075 (JP); TAKASHIMA, Yoshikazu, Culver City, California 90232 (US)
(74) Representative: Witte, Weller & Partner Patentanwälte mbB
(86) International application number: PCT/JP2015/069568
(87) International publication number: WO 2016/035447

(56) References cited:
- EP-A2- 1 134 738
- JP-A- 2002 279 626
- JP-A- 2008 084 515
- JP-A- 2010 211 904
- JP-A- 2011 070 732
- US-A1- 2006 133 221
- US-A1- 2007 274 178
- US-A1- 2011 182 156

## Description

### TECHNICAL FIELD

The present disclosure relates to an information processing apparatus, an information processing method, and a program. More specifically, the present disclosure relates to an information processing apparatus, an information processing method, and a program by which to execute reproduction and recording of contents by the use of various types of discs having different transfer rate setting regions or execute disc manufacture in a correct manner.

### BACKGROUND ART

Digital versatile discs (DVDs) and Blu-ray (registered trademark) discs (BDs) arewidelyusedas information recording media recording various contents such as movies and music.

The BD-ROMs as media recording in advance contents such as movies record high definition (HD) images as high-quality images, and data on sound and subtitles, for example.

The current BD-ROMs record mainly HD images, that is, high vision-compatible 2K images in many cases. However, it is predicted hereafter that high-quality picture technology will progress with increased media recording 4K images as ultra high definition (UHD) images.

As compared to the 2K images as HD images, the UHD images as 4K images and the like bring about increase in the amount of processing data per unit time. As a result, it is necessary to increase the data recording density to discs such as BDs and the data transfer rate.

As present, the data recording mode for UHD images to BDs is currently being standardized by Blu-ray (registered trademark) Disc Association (BDA) as a standard formulating organization.

A plan for using various different types of discs in combination is currently dominant as a standard under formulation.

Specifically, there has been proposed the combination use of two different types of discs as follows:
(A) A plural-zone setting disc in which data recording regions at different transfer rates are set in the disc outer peripheral region and the disc inner peripheral region,
(B) A single-zone setting disc in which data recording regions at a single transfer rate are set in all the disc regions .

For each of the two types, the use of various different types of discs different in total recording capacity is further being standardized.

However, when the combination use of the plurality of different types of discs is approved as a standard as described above, it is necessary to execute data recording and data reproduction processes corresponding to the individual types of discs. Accordingly, it is necessary to manufacture discs differently depending on the types of the discs to be manufactured.

For example, a reproduction apparatus needs to, before reproduction of a disc attached to the reproduction apparatus, identify the type of the disc, grasps the recording mode of a content recorded on the disc, and perform the reproduction process according to the recording mode.

Incidentally, Patent Document 1 (Japanese Patent Application Laid-Open No. 2010-250939) describes the transfer rate at which a disc is read for data reproduction and the reproduction process, for example.

However, there is no conventional technology for the process such as data reproduction by the use of a disc with regions to be processed at different transfer rates, for example.

### CITATION LIST

### PATENT DOCUMENT

Patent Document 1: Japanese Patent Application Laid-Open No. 2010-250939

Further prior art can be found in US 2007/274178 A1, EP 1134738 A2, US 2006/133221 A1, JP 2002-279626 A, and US 2011/182156 A1.

### SUMMARY OF THE INVENTION

### PROBLEMS TO BE SOLVED BY THE INVENTION

An object of the present disclosure is to provide an information processing apparatusan information processing method, and a program by which to execute correctly a process of reproducing data recorded in various different types of discs, a process of recording the data, or a process of manufacturing the discs in accordance with the individual types of discs.

### SOLUTIONS TO PROBLEMS

According to the present disclosure information processing apparatuses, information processing methods and a program are presented as defined in the claims.

Still other objects, features, and advantages of the present disclosure will be clarified by more detailed explanations with reference to examples of the present disclosure described later and the accompanying drawings. Incidentally, the system described herein is a logical assembly of a plurality of apparatuses but the apparatuses as constituent elements may not be contained in the same housing.

### EFFECTS OF THE INVENTION

According to a configuration of an embodiment of the present disclosure, it is possible to perform the correct data reproduction process and disc manufacturing process suited to the disc types on the basis of disc type information as disc-recorded data configuration information.

Specifically, for example, the reproduction apparatus executing data reproduction from the disc reads the disc type information recorded on the disc, grasps the disc-recorded data configuration on the basis of the disc type information, and executes the data readout and reproduction processes at the transfer rate according to the grasped recorded data configuration. The disc type information includes zone setting information indicating whether the disc is a single-zone disc composed of a single transfer rate zone or a plural-zone disc composed of a plurality of different transfer rate zones, and the reproduction apparatus performs data readout and reproduction by the use of algorithms corresponding to the zones.

This configuration makes it possible to perform correctly the data reproduction process and the disc manufacturing process suited to the disc types on the basis of the disc type information as the disc-recorded data configuration information.

Incidentally, the advantageous effects described herein are not limited ones but mere examples, and the present disclosure may have additional advantageous effects.

### BRIEF DESCRIPTION OF DRAWINGS

Fig. 1 is a diagram describing disc configuration examples under standardization.
Figs. 2(A) and 2(B) are diagrams describing examples of a single-zone disc composed only of a low transfer rate zone (LTR zone) and a plural-zone disc with the LTR zone and a high transfer rate zone (HTR zone).
Fig. 3 is a diagram describing a configuration example of data recorded in a Blu-ray (registered trademark) disc (BD) .
Fig. 4 is a diagram describing a correspondence between data recorded in an information recording medium (disc) and an example of reproduction process.
Figs. 5(A) and 5(B) are diagrams describing a data recording configuration in a three-layer structure disc and an example of reproduction process.
Figs. 6(A) and 6(B) are diagrams describing a data recording configuration in a three-layer structure disc and an example of reproduction process.
Figs. 7(A) and 7(B) are diagrams describing a data recording configuration in a three-layer structure disc and an example of reproduction process.
Fig. 8 is a diagram describing a data configuration example of an index table as recorded data in an index file recorded in an information recording medium (disc) of the present disclosure.
Fig. 9 is a diagram describing a flowchart of a process sequence executed by an information processing apparatus (reproduction apparatus) that reproduces a content recorded on the disc.
Fig. 10 is a diagram describing a flowchart of a process sequence executed by a disc manufacturing apparatus.
Fig. 11 is a diagram describing a hardware configuration example of an information processing apparatus that is applicable as a disc reproduction apparatus, a recording apparatus, or an information recording medium manufacturing apparatus.

### MODE FOR CARRYING OUT THE INVENTION

Details of an information processing apparatus, an information recording medium, and an information processing method, and a program of the present disclosure will be explained below with reference to the drawings. Incidentally, the explanations will be provided in accordance with the following items.
1. About disc configuration examples supporting ultra high defintion (UHD) images
2. About disc-recorded data and an example of reproduction process
3. About a data recording configuration of a disc having a plural-layer structure and an example of reproduction process
4. About an example of recording disc type information indicative of a disc configuration in a disc
5. About a configuration example of the information processing apparatus
6. Summary of configurations of the present disclosure

### [1. About disc configuration example supporting ultra high defintion (UHD) images]

First, disc configuration examples supporting UHD images will be explained.

As described above, the data recording mode for ultra high defintion (UHD) images in Blu-ray (registered trademark) discs (BDs) is currently being standardized by Blu-ray (registered trademark) Disc Association (BDA).

At present, a plan for using various different types of discs in combination is dominant as a standard under formulation.

Specifically, in the dominant plan, the following two different types of discs are used in combination:
(A) A plural-zone setting disc in which data recording regions at different transfer rates are set in the disc outer peripheral region and the disc inner peripheral region
(B) A single-zone setting disc in which data recording regions at a single transfer rate are set in all the disc regions .

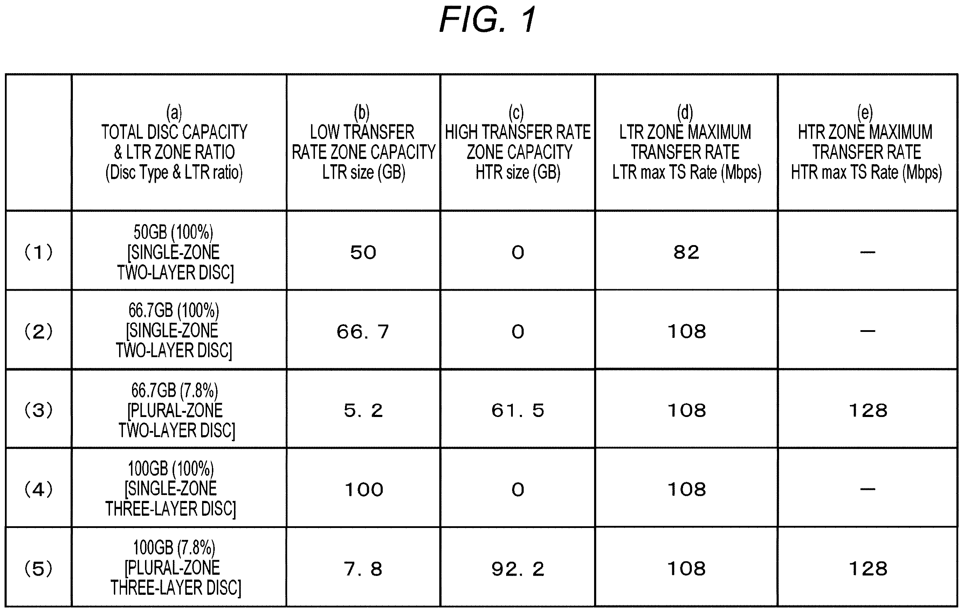

Disc configuration examples under standardization will be explained with reference to Fig. 1.

Fig. 1 is a diagram describing five types (1) to (5) of disc configuration examples that are being currently approved as standards.

For each of the five types (1) to (5), the following data (a) to (e) are set:
(a) Total disc capacity and low transfer rate (LTR) zone ratio (Disc type & LTR ratio)
(b) Low transfer rate zone capacity (LTR size) (GB)
(c) High transfer rate zone capacity (HTR size) (GB)
(d) LTR zone maximum transfer rate (LTR max TS Rate) (Mbps)
(e) High transfer rate (HTR) zone maximum transfer rate (HTR max TS Rate) (Mbps)

Incidentally, the low transfer rate (LTR) zone is a region that is set in the partial or entire data recording surface of the disc and is a disc region (zone) in which data readout is performed at a relatively low transfer rate.

In addition, the high transfer rate (HTR) zone is a region that is set in the partial or entire data recording surface of the disc and is a disc region (zone) in which data readout is performed at a relatively high transfer rate.

As illustrated in (d) and (e) of Fig. 1, the maximum transfer rate in the LTR zone is 82 Mbps or 108 Mbps.

In addition, the maximum transfer rate in the HTR zone is 128 Mbps.

Incidentally, all the discs (1) to (5) rotate at a rotation speed of about 5000 rpm at the time of data recording/reproduction.

The disc (1) has the following configuration:
(a) Single-zone two-layer disc with a total disc capacity of 50 GB and an LTR zone ratio of 100%
(b) The low transfer rate zone capacity (LTR size) is 50 GB
(c) The high transfer rate zone capacity (HTR size) is 0 GB
(d) The LTR zone maximum transfer rate (LTR max TS rate) is 82 Mbps.

The disc (2) has the following configuration:
(a) Single-zone two-layer disc with a total disc capacity of 66.7 GB and an LTR zone ratio of 100%
(b) The low transfer rate zone capacity (LTR size) is 66.7 GB
(c) The high transfer rate zone capacity (HTR size) is 0 GB
(d) The LTR zone maximum transfer rate (LTR max TS rate) is 108 Mbps.

The disc (3) has the following configuration:
(a) Plural-zone two-layer disc with a total disc capacity of 66.7 GB and an LTR zone ratio of 7.8%
(b) The low transfer rate zone capacity (LTR size) is 5.2 GB
(c) The high transfer rate zone capacity (HTR size) is 61.5 GB
(d) The LTR zone maximum transfer rate (LTR max TS rate) is 108 Mbps
(e) The HTR zone maximum transfer rate (HTR max TS rate) is 128 Mbps.

The disc (4) has the following configuration:
(a) Single-zone three-layer disc with a total disc capacity of 100 GB and an LTR zone ratio of 100%
(b) The low transfer rate zone capacity (LTR size) is 100 GB
(c) The high transfer rate zone capacity (HTR size) is 0 GB
(d) The LTR zone maximum transfer rate (LTR max TS rate) is 108 Mbps.

The disc (5) has the following configuration:
(a) Plural-zone three-layer disc with a total disc capacity of 100 GB and an LTR zone ratio of 7.8%
(b) The low transfer rate zone capacity (LTR size) is 7.8 GB
(c) The high transfer rate zone capacity (HTR size) is 92.2 GB
(d) The LTR zone maximum transfer rate (LTR max TS rate) is 108 Mbps
(e) The HTR zone maximum transfer rate (HTR max TS rate) is 128 Mbps.

As described above, the five types of discs (1) to (5) illustrated in Fig. 1 are being standardized as disc configurations being standardized for discs supporting ultra high defintion (UHD) images.

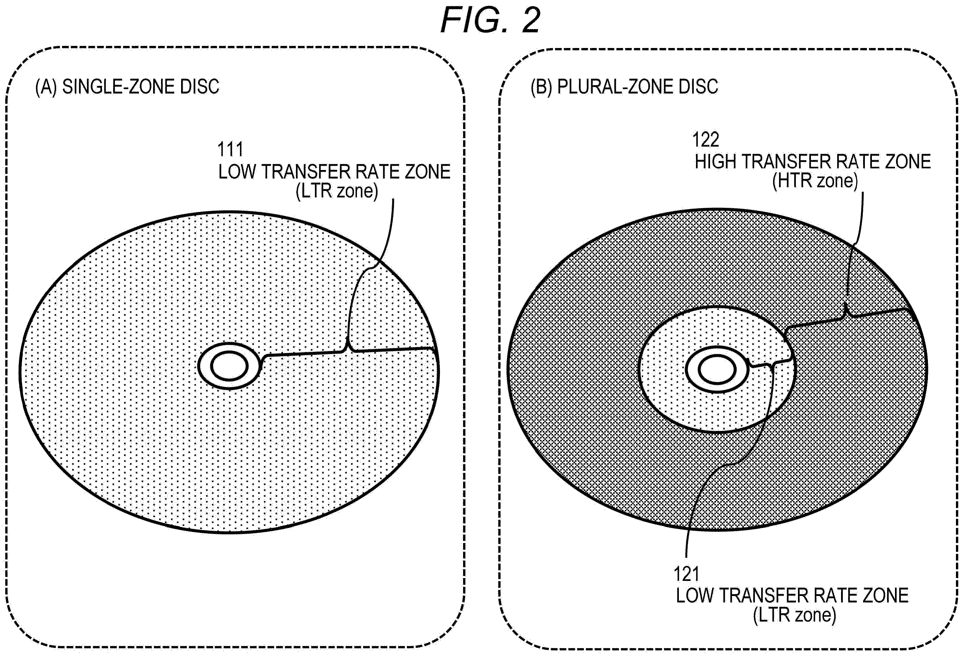

An example of single-zone disc only composed of an LTR zone described in (1), (2), and (4) of Fig. 1 and an example of plural-zone disc having an LTR zone and an HTR zone described in (3) and (5) of Fig. 1 will be explained with reference to Figs. 2(A) and 2(B).

Fig. 2(A) illustrates a configuration example of a single-zone disc only composed of an LTR zone described in (1), (2), and (4) of Fig. 1.

Fig. 2(B) illustrates a configuration example of a plural-zone disc having an LTR zone and an HTR zone described in (3) and (5) of Fig. 1.

In the single-zone disc illustrated in Fig. 2(A), the entire data recording surface of the disc is composed of an LTR zone 111.

In the case of the 50-GB disc in (1) of Fig. 1, an information processing apparatus executing data reproduction (reproduction apparatus) can reproduce an UHD image by reading data at the maximum transfer rate of 82 Mbps.

In addition, in the case of the 66.7-GB disc in (2) of Fig. 1 or the 100-GB disc in (4) of Fig. 1, the information processing apparatus executing data reproduction (reproduction apparatus) can reproduce an UHD image by reading data at the maximum transfer rate of 108 Mbps.

In the plural-zone disc illustrated in Fig. 2(B), an LTR zone 121 is set in the inner peripheral part of the data recording surface of the disc and an HTR zone 122 is set in the outer peripheral part of the data recording surface of the disc.

When a disc rotates at a specific speed, for example, 5000 rpm, the information processing apparatus executing data reproduction (reproduction apparatus) can read data from a longer data recording region in the outer peripheral part as compared to the inner peripheral part. That is, the transfer rate can be set to be higher.

In the inner peripheral part of the disc, the data readable length per unit time is shorter than that in the outer peripheral part, and the transfer rate is lower to make it difficult to read data at a higher rate.

Meanwhile, in the outer peripheral part of the disc, the data readable length per unit time is longer than that in the inner peripheral part, and the transfer rate can be increased to achieve data readout at a higher rate.

This is because the HTR zone is set only in the outer peripheral part of the disc.

Setting the HTR zone 122 as illustrated in Fig. 2(B) makes it possible to increase the total data recording capacity of the disc and record UHD images for a long time.

In the 66.7-GB disc in (3) of Fig. 1 or the 100-GB disc in (5) of Fig. 1, the information processing apparatus executing data reproduction (reproduction apparatus) executes data readout at different maximum transfer rates in the individual zones.

Specifically, the information processing apparatus performs data readout at a maximum transfer rate of 108 Mbps in the LTR zone in the inner peripheral part of the disc. In addition, the information processing apparatus performs data readout at a maximum transfer rate of 128 Mbps in the HTR zone in the outer peripheral part of the disc.

### [2. About disc-recorded data and example of reproduction process]

The disc records various kinds of data such as images, sounds, and subscriptions to be reproduced, reproduction control information files applied to the reproduction processes for the foregoing data, and management information files.

For example, the disc recording the content of a movie or the like records a clip AV stream file composed of transport stream (TS) packets storing the images, sounds, subscriptions, and the like to be reproduced.

Further, the disc records a clip information file as a control file set in correspondence with the clip AV stream file, a playlist file, a movie object file storing a reproduction program, an index file recording content title information and the like, an encryption key file storing the key used to decode the content, and other various management information files.

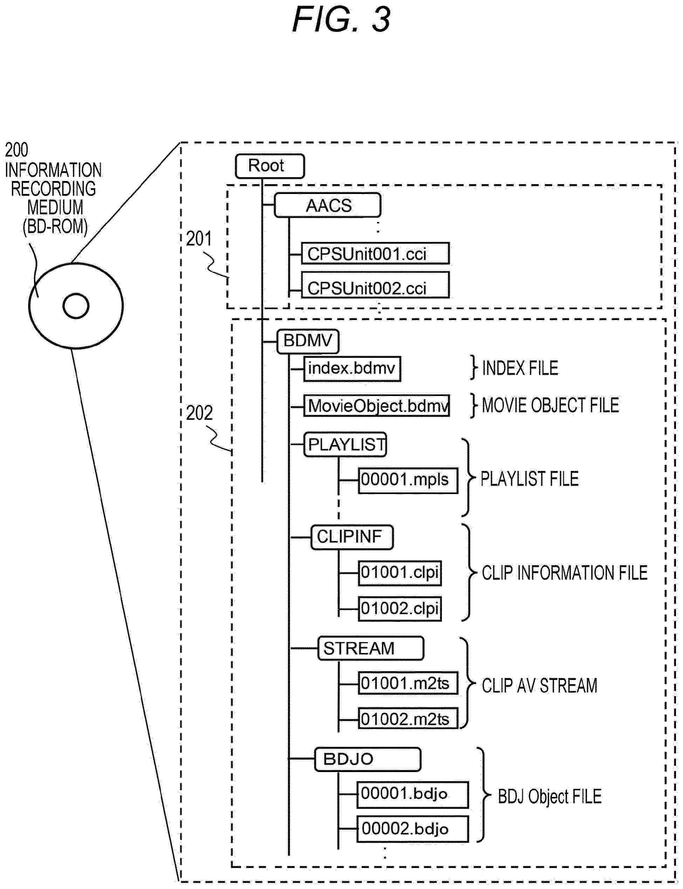

A configuration example of data recorded in a Blu-ray (registered trademark) discs (BD) will be explained with reference to Fig. 3.

Fig. 3 is a diagram illustrating directories of data recorded in accordance with BDMV format in an information recording medium (disc) 200 as a BD-ROM that is a ROM-type BD, for example.

The directories are divided into a management information setting unit 201 (AACS directory) and a data unit 202 (BDMV directory) as illustrated in Fig. 3.

The management information setting unit 201 (AACS directory) stores a CPS unit key file as a data encryption key, a usage control information file, and the like.

Meanwhile, the BDMV directory of the data unit 202 and subsequence holds an index file, a movie object file, a playlist file, a clip information file, a clip AV stream file, and a BDJO file, for example.

The index file stores title information as index information applied to the reproduction process and the like.

The movie object file stores a reproduction program specified by the title.

The playlist file is a file that defines the order in which the contents are reproduced in accordance with the program information in the reproduction program specified by the title, and has specification information for the clip information having reproduction position information.

The clip information file is a file specified by the playlist file and has the reproduction position information and the like for the clip AV stream file.

The clip AV stream file is a file storing AV stream data to be reproduced.

The BDJO file is a file storing execution control information for the file storing a JAVA (registered trademark) program, commands, and the like.

The sequence of reproduction of contents recorded in the information recording medium by the information processing apparatus is as follows:
(a) First, a specific title is specified from the index file by a reproduction application.
(b) The reproduction program associated with the specified title is selected.
(c) The playlist defining the order in which the contents are reproduced is selected in accordance with the program information on the selected reproduction program.
(d) The AV stream or command as real content data is read with the clip information defined in the selected playlist, and the AV stream is reproduced or the command is executed.

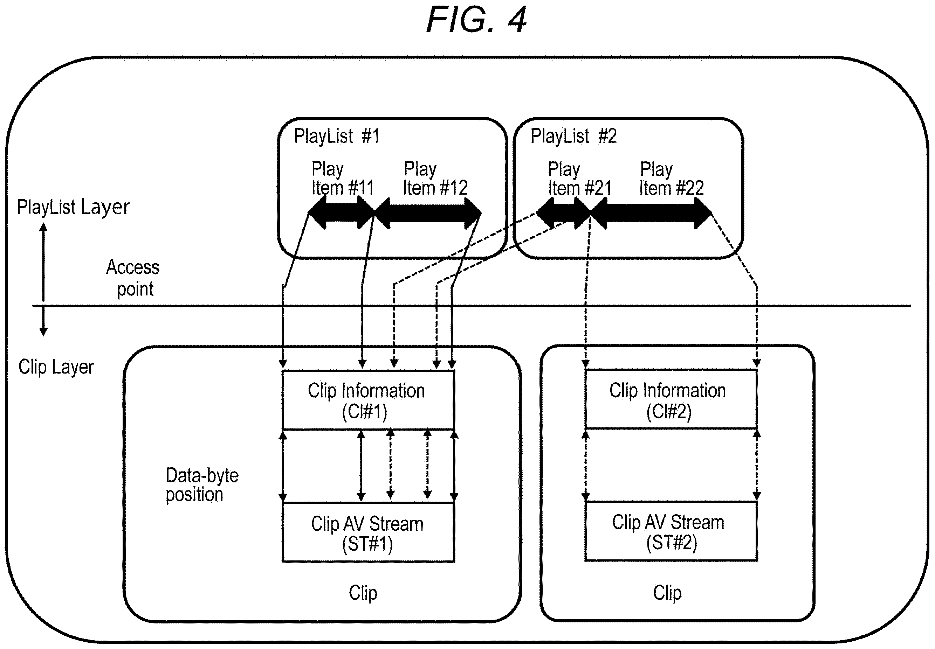

Fig. 4 is a diagram describing the correspondences between the following data recorded in the information recording medium (disc) 200: a playlist file; a clip information file; and a clip AV stream file.

The AV streams composed of images and audio data as actual reproduction data to be reproduced are recorded as clip AV stream files. Further, playlist files and clip information files are defined as management information and reproduction control information files for these AV streams.

These files in the plurality of categories can be divided into a playlist layer including playlist files and a clip layer composed of clip AV stream files and clip information files as illustrated in Fig. 4.

Incidentally, one clip AV stream file is associated with one clip information file. The pair of files is considered as one object and these files may be collectively called clip.

The clip information file records detailed information on the data included in the clip AV stream file, for example, the management information such as an EP map recording I picture position information on MPEG data.

The clip AV stream file stores data in which an MPEG-2TS (transport stream) is arranged in accordance with the defined structure of BDMV format.

In addition, the clip information file stores management information for acquiring the reproduction start position of data stored in the clip AV stream file, including for example data on correspondence between the position of byte sequence data in the clip AV stream file and the reproduction time position as a reproduction start point (entry point (EP)) on a time axis.

For example, when a time stamp indicative of the position after a lapse of the reproduction time from the start point of the content is given, the clip information file can be referred to acquire the data readout position of the clip AV stream data, that is, the address as a reproduction start point.

The playlist file has information for specification of a reproduction section in the reproducible data included in the clip (= the clip information file + the clip AV stream file) layer.

The playlist file has one or more play items set. Each of the play items has information for specification of a reproduction section in the reproducible data included in the clip (= the clip information file + the clip AV stream file) layer.

Incidentally, the clip AV stream file storing real data on images and sounds to be reproduced has an MPEG-2 transport stream (TS) file structure.

### [3. About data recording configuration of disc having plural-layer structure and example of reproduction process]

The discs (1) to (5) illustrated in Fig. 1 explained above are all multi-layer structure discs with two layers or three layers.

The multi-layer disc can record sequentially a long-time content such as a movie content in a plurality of layers, for example. In the case of reproducing the content recorded in plurality of layers, the reproduction apparatus needs to jump to different layers, that is, perform inter-layer jumps during the reproduction.

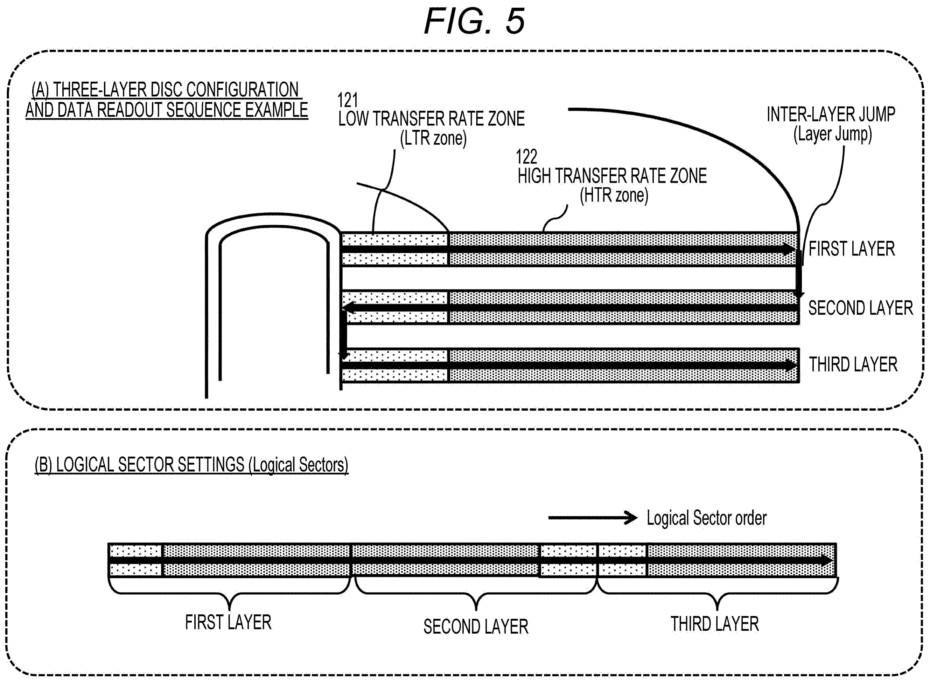

A data recording configuration and an example of reproduction process with a three-layer structure disc will be explained with reference to Figs. 5(A) and 5(B) and subsequent drawings.

Fig. 5(A) is a diagram illustrating a cross-section structure of the 100-GB plural-zone three-layer disc in (5) of Fig. 1.

The disc has a three-layer configuration of a first layer, a second layer, and a third layer from the top.

The 100-GB three-layer structure disc illustrated in Fig. 5(A) is a plural-zone three-layer disc in (5) of Fig. 1 and has the following configuration:
(a) Plural-zone three-layer disc with a total disc capacity of 100 GB and an LTR zone ratio of 7.8%
(b) The low transfer rate zone capacity (LTR size) is 7.8 GB
(c) The high transfer rate zone capacity (HTR size) is 92.2 GB
(d) The LTR zone maximum transfer rate (LTR max TS Rate) is 108 Mbps
(e) The HTR zone maximum transfer rate (HTR max TS Rate) is 128 Mbps

As illustrated in Fig. 5(A), each of the three layers has LTR zones 121 at the inner peripheral part of the disc and HTR zones 122 at the outer peripheral part of the disc.

The process for recording a content such as a movie in the three-layer disc with such different transfer rate zones set and reproducing the content will be explained.

Incidentally, various settings are available for a content recording method. In the example of Figs. 5(A) and 5(B), the reproduction data is recorded in the plurality of layers at all the inner and outer peripheral parts of the disc, regardless of the boundaries between the transfer rate zones.

In addition, the reproduction data is data on images, sounds, subscriptions, and the like stored in the clip AV stream files explained above with reference to Figs. 3 and 4.

When the reproduction data is recorded at such settings, the order in which the reproduction data is read is as the order in which the logical sectors are set illustrated in Fig. 5(B).

The reproduction apparatus needs to read and reproduce alternately the zones at the different transfer rates as illustrated in Fig. 5(B).

Fig. 5(B) illustrates data arranged sequentially from left to right in accordance with logical sectors, and the reproduction process is executed in this order of logical sectors.

At the settings illustrated in Figs. 5(A) and 5(B), the reproduction apparatus executes data readout alternately from the zones different in transfer rate. Accordingly, the reproduction apparatus needs to switch between the dataprocess algorithms at the time of changing the transfer rate.

Such data process switching may be a burden on the reproduction apparatus.

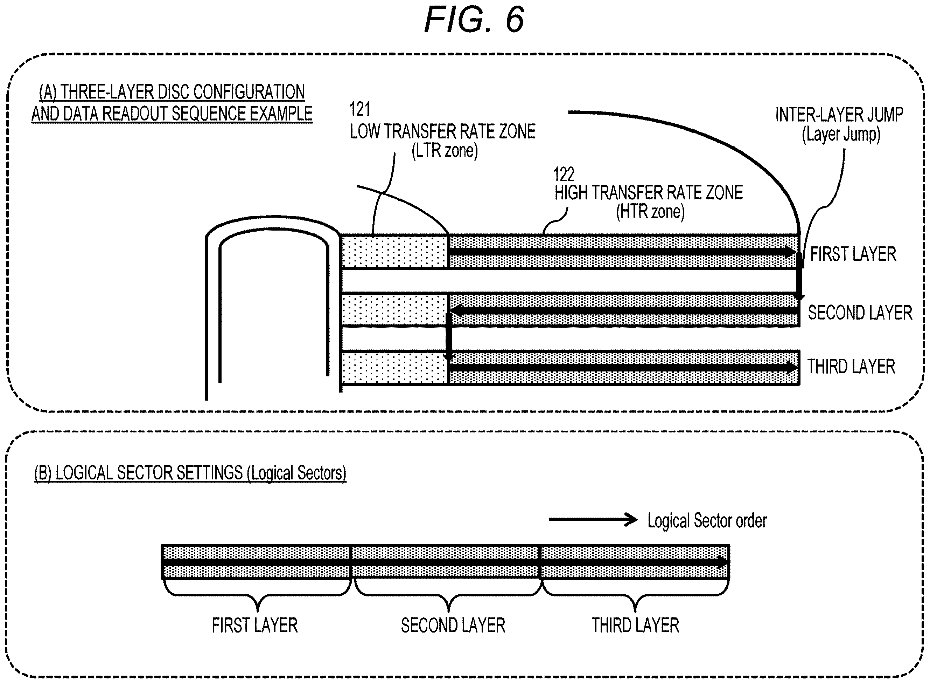

An example of data recording and reproduction processes without such data process switching will be explained with reference to Figs. 6(A) and 6(B).

As with Fig. 5(A), Fig. 6(A) is a diagram illustrating a cross-section structure of the 100-GB plural-zone three-layer disc in (5) of Fig. 1.

The disc has a three-layer configuration of a first layer, a second layer, and a third layer from the top.

Each of the layers has the LTR zone 121 formed at the inner peripheral part of the disc and the HTR zone 122 formed at the outer peripheral part of the disc.

Each of the three layers illustrated in Fig. 6(A) has the LTR zone 121 at the inner peripheral part of the disc and the HTR zone 122 at the outer peripheral part of the disc.

A process for recording a content such as a movie in the three-layer disc with such different transfer rate zones and reproducing the content will be explained.

In the example of Figs. 6(A) and 6(B), one content, for example, reproduction data of a movie or the like is recorded only in the HTR zones 122.

Data files needed to be read in sequence such as clip AV stream files are recorded in the HTR zones 122, and an encryption key file, an index file, a management data file, and the like are recorded in the LTR zones 121.

When the reproduction data is recorded in the plurality of layers only in the HTR zones 122, the order in which the reproduction data is read is as in the order in which the logical sectors are set illustrated in Fig. 6(B).

The reproduction apparatus can read data only from the HTR zones and reproduce the same as illustrated in Fig. 6(B).

In the configuration of Figs. 6(A) and 6(B), the reproduction apparatus have only to read the data from the HTR zones 122 and does not need to execute data readout alternately from the different transfer rate zones as explained above with reference to Fig. 5(B). Therefore, for data readout of one content, there is no need to switch between the data process algorithms.

Incidentally, the divisions of the recorded data in the HTR zone 122 and the LTR zone 121 are set as described below, for example.

The clip AV stream files and the clip information files to be reproduced are recorded in the HTR zones 122. Other management information files, an index file, movie object files, playlist files, and the like as database files are recorded in the LTR zones 121.

At such settings, there is no need to switch between the process algorithms in the process for reading the clip information files or the clip AV stream files requiring sequential readout.

Alternatively, the body content of a movie may be recorded in the HTR zones 122 and service contents other than the body content or the like may be recorded in the LTR zones 121.

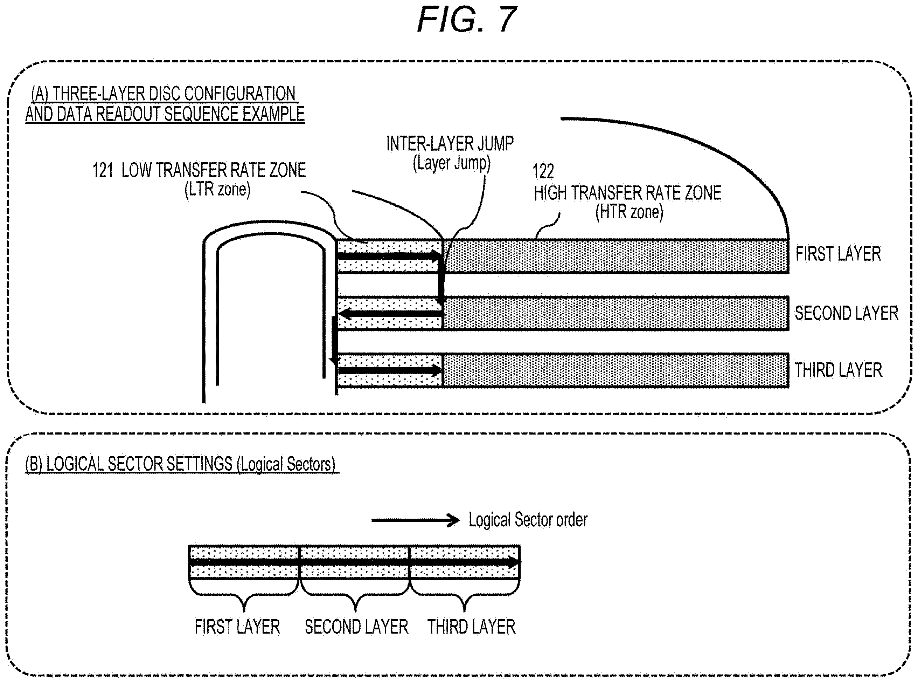

Figs. 7(A) and 7(B) are diagrams describing a data recording configuration only in the LTR zones 121 and an example of reproduction process.

Figs. 7(A) and 7(B) illustrate an example of data readout process only in the LTR zones 121. For example, the database files corresponding to the clip information files and the clip AV stream files recorded in the HTR zones 121, are recorded in the LTR zones 121.

With these database files, it is possible to execute the readout process before start of reproduction, develop the read data in the memory of the reproduction apparatus, for example, a RAM or the like, and perform the reproduction process with reference to the developed data in the RAM.

The order in which the data recorded in the plurality of layers only in the LTR zones 121 are read is as in the order in which the logical sectors are set illustrated in Fig. 7(B).

The reproduction apparatus reads data, for example, the database file data only from the LTR zones as illustrated in Fig. 7(B).

In the configuration of Figs. 7(A) and 7(B), the reproduction apparatus have only to read the data from the LTR zones 121 and does not need to execute data readout alternately from the different transfer rate zones. Therefore, for data readout, there is no need to switch between the data process algorithms.

### [4. About example of recording disc type information indicative of disc configuration in disc]

As explained above with reference to Fig. 1 and others, a plurality of different types of discs is being standardized as Blu-ray (registered trademark) discs (BDs) as discs supporting ultra high defintion (UHD) images.

As explained above, there is a possibility that two different types of discs as follows are used:
(A) A plural-zone setting disc in which data recording regions at different transfer rates are set in the disc outer peripheral region and the disc inner peripheral region
(B) A single-zone setting disc in which data recording regions at a single transfer rate are set in all the disc regions .

Further, there are various settings on the total capacities and number of layers of the discs. There is a high possibility that at least the five kinds of discs illustrated in Fig. 1 will be used. In addition, there is a possibility that discs with other configurations than the five illustrated in Fig. 1 will be used in the future.

Data reproduction processes, recording processes, and configurations for executing correctly the disc manufacturing processes in the case where various types of discs are used as described above, will be explained below.

As described above with reference to Fig. 3 and others, in the case in which the reproduction apparatus reproduces the content recorded in the information recording medium, the reproduction apparatus first acquires the index file by the reproduction application and selects the title of the content to be reproduced from the index file.

Specifically, the reproduction apparatus performs a process for first acquiring the index file and reading the information recorded in the index file.

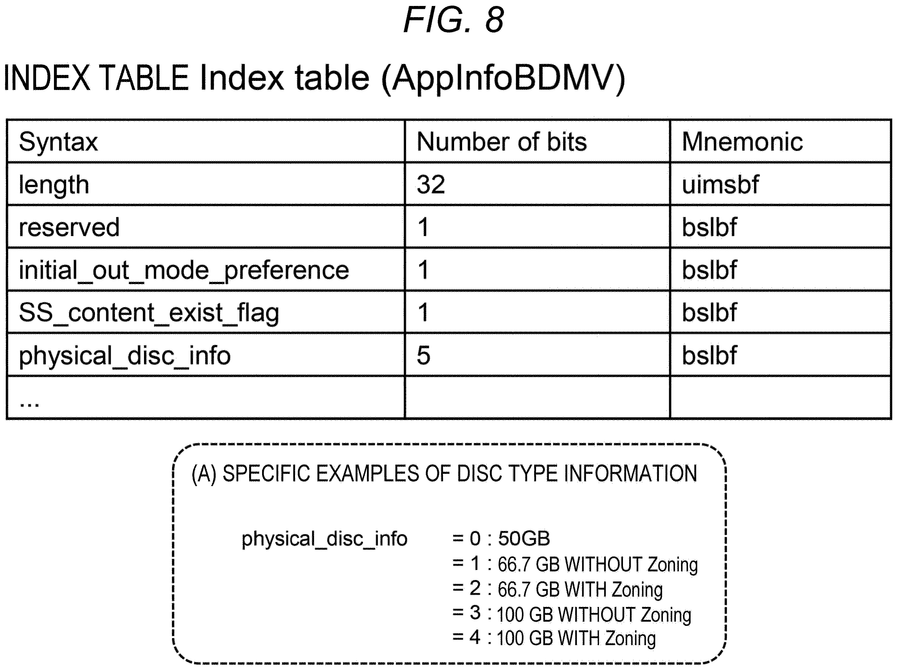

Fig. 8 illustrates a data configuration example of an index table as the recorded data in the index file recorded in the information recording medium (disc) 200 of the present disclosure.

Fig. 8 is a diagram illustrating part of the recorded data in the index table recorded in the information recording medium (disc) of the present disclosure.

The index table records the following data:
(a) Data length [length]
(b) Reproduction start data type information (3D image or 2D image) [initial_out_mode_preference]
(c) In-disc 3D image data presence or absence information [SS_content_exist_flag]
(d) Disc type information [physical_disc_info]

Incidentally, the data illustrated in Fig. 8 indicates only part of the data recorded in the index table. The index table also records various data as well as the following ones.

In the recorded data in the index table described in Fig. 8, the following data is newly added in the present disclosure:
(d) Disc type information [physical_disc_info]

As the disc type information, the value indicative of the type of the disc recording the index table is set as in a specific example of the disc type information described in Fig. 8(a).

Specifically, the record value indicative of any of the following disc types is recorded, for example:
(a) Record value = 0: Single-zone two-layer disc with a total recording capacity of 50 GB (Fig. 1(1))
(b) Record value = 1: Single-zone two-layer disc with a total recording capacity of 66.7 GB (Fig. 1(2))
(c) Record value = 2: plural-zone two-layer disc with a total recording capacity of 66.7 GB (Fig. 1(3))
(d) Record value = 3: Single-zone three-layer disc with a total recording capacity of 100 GB (Fig. 1(4))
(e) Recording value = 5: Plural-zone three-layer disc with a total recording capacity of 100 GB (Fig. 1(5))

As described above, the index table records the disc type information indicating the type and configuration of the disc.

The reproduction apparatus reproducing the disc-recorded content first reads the index table to acquire the setting value of the disc type information recorded in the index table.

The reproduction apparatus can grasp the disc configuration according to the setting value indicative of the disc type recorded in the index table, and decide in advance the data processing mode that will be necessary at the time of reproduction of the content, and execute the correct reproduction process in accordance with the disc configuration.

Further, recording the disc type in the index table can obtain the following effects.

The reproduction apparatus can determine at what data rate the file is recorded in the outer periphery of the disc in accordance with the disc type information recorded in the index table. The reproduction apparatus can control the number of rotations of the disc to a necessary level in accordance with the determination result. Specifically, the reproduction apparatus can execute data readout at the minimum number of rotations. This control allows reduction of noise resulting from the disc rotation, reduction of burden on the drive, and reduction of power consumption.

In this manner, the data processing unit of the reproduction apparatus reproducing data from the disc reads the disc type information recorded on the disc, grasps the configuration of the data recorded on the disc on the basis of the read disc type information, and executes the data readout and reproduction processes at the transfer rate according to the grasped recorded data configuration.

As described above, the disc type information includes zone setting information by which the disc can be determined as a single-zone disc composed only of a single transfer rate zone or a plural-zone disc composed of a plurality of different transfer rate zones, and total recording capacity information.

The data processing unit of the reproduction apparatus executes the data readout and reproduction processes using an algorithm decided by the use of the foregoing information.

Specifically, when the disc is a single-zone disc composed only of a single transfer rate zone, the data processing unit executes the data readout and reproduction processes in the entire region of the disc by the same algorithm.

In addition, when the disc is a plural-zone disc composed of a plurality of different transfer rate zones, the data processing unit executes the data readout and reproduction processes using different algorithms for the individual zones of the disc.

Incidentally, the disc type information recorded in the index table has merits in manufacturing content-recording discs.

Contents are created in content production studios. The contents are created at various settings in the content production studios.

Specifically, the contents include contents recordable only in the LTR zones, contents to be recorded by the use of two zones, that is, the LTR zones and the HTR zones, and others .

In the content production studio, it is decided in which of the modes (1) to (5) of Fig. 1 the content is to be recorded, and the information on the decided mode is recorded in advance as the disc type information in the index table explained above with reference to Fig. 8, and is provided to a disc factory.

In the disc factory, it is possible to determine the disc type of the disc to record the content with reference to the index table included in the data received from the content production studio.

In the disc factory, it is possible to decide the mode for recording the content on the disc in accordance with the determination result and record the content.

In addition, at a reproduction test of the recorded data or the like, it is possible to grasp the configuration of the recorded data with reference to the disc type information in the index table and perform correctly the reproduction test of the recorded data.

Specifically, a data processing unit executing the data process in a disc manufacturing apparatus reads the disc type information included in the disc recording information, and decides the mode for recording the data on the disc on the basis of the read disc type information, and executes the data recording process on the disc.

Further, at a reproduction test of the recorded data in the manufactured disc, the data processing unit reads the disc type information in the index table recorded on the disc, and executes the recorded data reproduction test using an algorithm decided in accordance with the read disc type information.

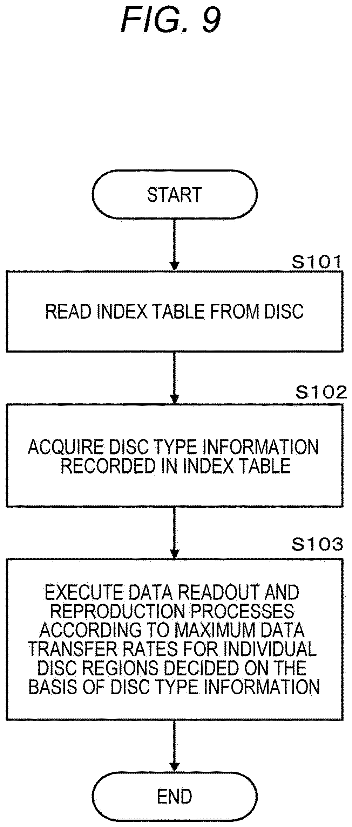

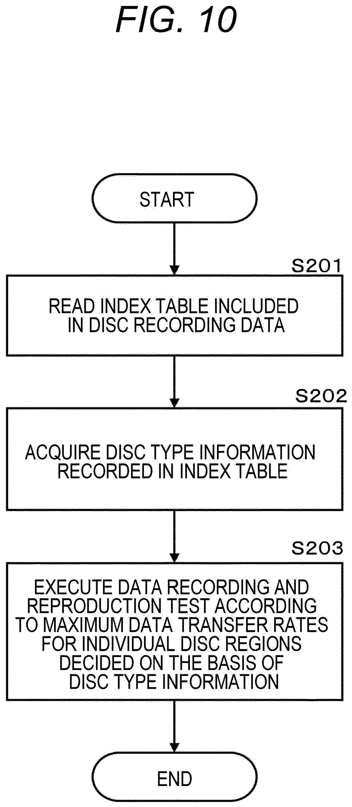

Next, a specific process sequence with the use of the disc type information in the index table explained above with reference to Fig. 8 will be explained with reference to the flowcharts described in Figs. 9 and 10.

Fig. 9 is a flowchart of a process sequence executed by the information processing apparatus (reproduction apparatus) reproducing the content recorded on the disc.

Fig. 10 is a flowchart of a process sequence executed by the disc manufacturing apparatus.

First, the process sequence executed by the information processing apparatus (reproduction apparatus) reproducing the content recorded on the disc will be explained with reference to the flowchart in Fig. 9.

The operations in the flowchart of Fig. 9 are executed under control of a data processing unit of the reproduction apparatus including a CPU with the program execution function. The program to be executed is a program (reproduction program) stored in advance in the storage unit of the reproduction apparatus or a program (reproduction application) recorded on the disc.

The steps in the flowchart of Fig. 9 will be explained below.

### (Step S101)

First, at step S101, the reproduction apparatus reads the index table recorded together with the content to be reproduced from the disc storing the content.

The disc records the data under the directories explained above with reference to Fig. 3, for example. In addition, the disc also records the index table including the disc type information explained above with reference to Fig. 8.

The disc records a clip AV stream file to be reproduced, a clip information file, a playlist file, a movie object file, an index file, and the like.

The reproduction apparatus first reads the index file and reads the index table stored in the index file.

The index table is a table recording the disc type information as explained above with reference to Fig. 8.

The disc type information includes the information on the mode of the content recorded on the disc, specifically, the information indicating which of the data recording configurations (1) to (5) explained above with reference to Fig. 1 the disc has, for example.

### (Step S102)

At step S102, the reproduction apparatus reads the disc type information recorded in the index table read from the disc.

For example, the reproduction apparatus reads the information indicating any one of (1) to (5) of Fig. 1.

### (Step S103)

At step S103, the reproduction apparatus decides the data readout mode and the reproduction mode in accordance with the maximum data transfer rates for the individual regions of the disc determined on the basis of the disc type information acquired at step S102, and executes the data readout and reproduction processes from the disc in accordance with the decided mode.

For example, when the disc type information is set as described in Fig. 8(a), the reproduction apparatus performs the processes as follows:
(a) Disc type information = 0 (50-GB single-zone two-layer disc)
   In this case, the reproduction apparatus determines that the disc is composed only of LTR zones, and executes the data readout and reproduction processes uniformly at the low transfer rate.
(b) Disc type information = 1 (66.7-GB single-zone two-layer disc)
   In this case, the reproduction apparatus determines that the disc is composed of only LTR zones, and executes the data readout and reproduction processes uniformly at the low transfer rate.
(c) Disc type information = 2(66.7-GB plural-zone two-layer disc)
   In this case, the reproduction apparatus determines that the disc is composed of a plurality of zones, that is, LTR zones and HTR zones, and executes the data readout and reproduction processes while switching between the HTR-compatible process and the LTR-compatible process.
(d) Disc type information = 3 (100-GB single-zone three-layer disc)
   In this case, the reproduction apparatus determines that the disc is composed only of LTR zones, and executes the data readout and reproduction processes uniformly at the low transfer rate.
(e) Disc type information = 4 (100-GB plural-zone three-layer disc)

In this case, the reproduction apparatus determines that the disc is composed of a plurality of zones, that is, LTR zones and HTR zones, and executes the data readout and reproduction processes while switching between the HTR-compatible process and the LTR-compatible process.

Next, a process sequence executed by the disc manufacturing apparatus will be explained with reference to the flowchart described in Fig. 10.

The operations in the flowchart of Fig. 10 are executed under control of a data processing unit of the disc manufacturing apparatus including a CPU with the program execution function. The program to be executed is a program (reproduction program) stored in advance in a storage unit of the disc manufacturing apparatus.

Next, the steps in the flowchart of Fig. 10 will be explained below.

### (Step S201)

First, at step S201, the disc manufacturing apparatus reads the index table included in the disc-recorded data received from a content production studio, for example.

Incidentally, the disc-recorded data is recorded in a medium such as a flash memory, for example, and is acquired from the content production studio. Alternatively, the disc-recorded data may be set in various ways such as being received via a data communication unit.

The disc-recorded data includes the data under the directories explained above with reference to Fig. 3, for example.

The disc-recorded data includes a clip AV stream file to be reproduced, a clip information file, a playlist file, a movie object file, an index file, and the like.

The disc manufacturing apparatus reads the index file from the disc-recorded data, and reads the index table stored in the index file.

The index table is a table recording the disc type information as explained above with reference to Fig. 8.

The disc type information includes the information on the mode of the content recorded on the disc, specifically, the information indicating which of the data recording configurations (1) to (5) explained above with reference to Fig. 1 the disc has, for example.

### (Step S202)

At step S202, the disc manufacturing apparatus reads the disc type information recorded in the index table read from the disc-recorded data.

For example, the disc manufacturing apparatus reads the information indicative of any one of (1) to (5) of Fig. 1.

### (Step S203)

At step S203, the disc manufacturing apparatus executes a data recording process, a reproduction test of the recorded data, and the like, at the maximum data transfer rates for the individual regions of the disc determined on the basis of the disc type information acquired at step S202.

For example, when the disc type information is set as described in Fig. 8(a), the disc manufacturing apparatus performs the following processes:
(a) Disc type information = 0 (50-GB single-zone two-layer disc)
   In this case, the disc manufacturing apparatus manufactures a disc composed only of LTR zones. At the reproduction test after the manufacture of the disc, the disc manufacturing apparatus executes the data readout and reproduction processes uniformly at the low transfer rate.
(b) Disc type information = 1 (66.7-GB single-zone two-layer disc)
   In this case, the disc manufacturing apparatus manufactures a disc composed only of LTR zones. At the reproduction test after the manufacture of the disc, the disc manufacturing apparatus executes the data readout and reproduction processes uniformly at the low transfer rate.
(c) Disc type information = 2 (66.7-GB plural-zone two-layer disc)
   In this case, the disc manufacturing apparatus manufactures a disc composed of a plurality of zones, that is, LTR zones and HTR zones. At the reproduction test after the manufacture of the disc, the disc manufacturing apparatus executes the data readout and reproduction processes while switching between the HTR-compatible process and the LTR-compatible process.
(d) Disc type information = 3 (100-GB single-zone three-layer disc)
   In this case, the disc manufacturing apparatus manufactures a disc composed only of LTR zones. At the reproduction test after the manufacture of the disc, the disc manufacturing apparatus executes the data readout and reproduction processes uniformly at the low transfer rate.
(e) Disc type information = 4 (100-GB plural-zone three-layer disc)

In this case, the disc manufacturing apparatus manufactures a disc composed of a plurality of zones, that is, LTR zones and HTR zones. At the reproduction test after the manufacture of the disc, the disc manufacturing apparatus executes the data readout and reproduction processes while switching between the HTR-compatible process and the LTR-compatible process.

### [5. About configuration example of information processing apparatus]

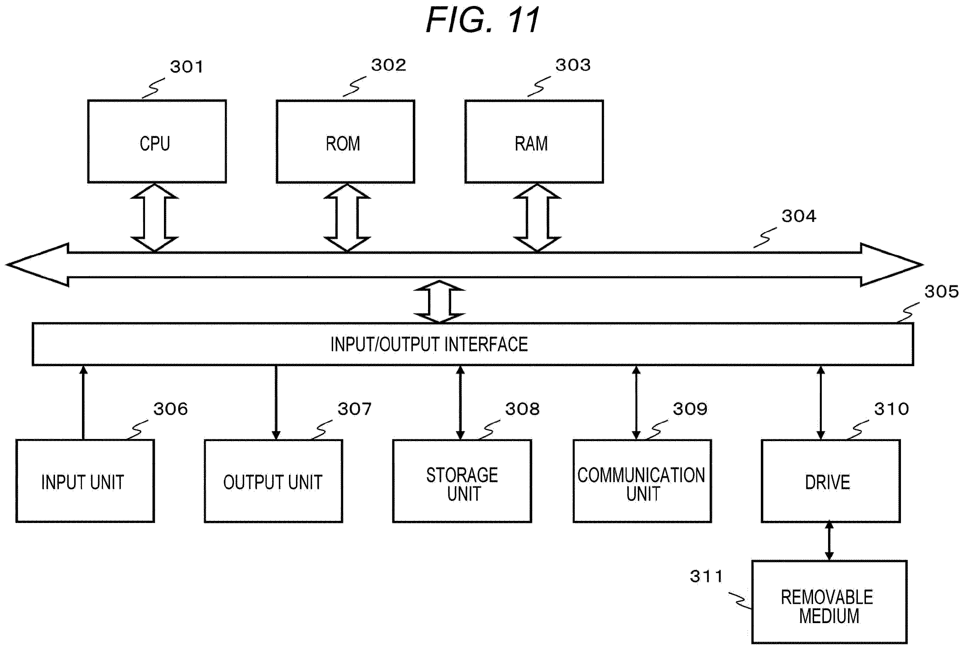

Next, a hardware configuration example of the information processing apparatus applicable as a disc reproduction apparatus, a recording apparatus, or an information recording medium manufacturing apparatus will be explained with reference to Fig. 11.

A central processing unit (CPU) 301 serves as a data processing unit that executes various processes in accordance with programs stored in a read only memory (ROM) 302 or a storage unit 308. For example, the CPU 301 executes the processes in accordance with the sequences explained above in relation to the foregoing embodiment. A random access memory (RAM) 303 stores programs, data, and the like executed by the CPU 301. The CPU 301, the ROM 302, and the RAM 303 are connected together via a bus 304.

The CPU 301 is connected to an input/output interface 305 via the bus 304. The input/output interface 305 is also connected to an input unit 306 composed of various switches, a keyboard, a mouse, a microphone, and the like, and an output unit 307 composed of a display, a speaker, and the like. The CPU 301 executes various processes in response to instructions input from the input unit 306, and outputs process results to the output unit 307, for example.

The storage unit 308 connected to the input/output interface 305 is composed of a hard disc and the like, for example, and stores the programs executed by the CPU 301 and various kinds of data. A communication unit 309 serves as a transmission/reception unit for data communication via a network such as the internet or a local area network and as a transmission/reception unit of broadcast waves to communicate with external apparatuses.

A drive 310 connected to the input/output interface 305 drives a removable medium 311 such as a magnetic disc, an optical disc, a magneto-optical disc, a semiconductor memory such as a memory card to execute data recording or readout.

In addition, the CPU 301 can encode or decode data as a data processing unit. Alternatively, a codec as dedicated hardware for executing an encoding process or a decoding process may be included.

### [6. Summary of configuration of present disclosure]

The example of the present disclosure has been described in detail so far with reference to the specific example. However, it is obvious that those skilled in the art can modify the example or replace the same with another one without deviating from the gist of the present disclosure. That is, the present invention has been disclosed in the form of exemplification and should not be interpreted in a limited way. To determine the gist of the present disclosure, the claims should be referred to.

### INDUSTRIAL APPLICABILITY

As having been explained so far, according to a configuration of an embodiment of the present disclosure, it is possible to perform the correct data reproduction process and disc manufacturing process suited to the disc types on the basis of the disc type information as disc-recorded data configuration information.

Specifically, for example, the reproduction apparatus executing data reproduction from the disc reads the disc type information recorded on the disc, grasps the disc-recorded data configuration on the basis of the disc type information, and executes the data readout and reproduction processes at the transfer rate according to the grasped recorded data configuration. The disc type information includes zone setting information indicating whether the disc is a single-zone disc composed of a single transfer rate zone or a plural-zone disc composed of a plurality of different transfer rate zones, and the reproduction apparatus performs data readout and reproduction by the use of algorithms corresponding to the zones.

This configuration makes it possible to perform correctly the data reproduction process and the disc manufacturing process suited to the disc types on the basis of the disc type information as the disc-recorded data configuration information.

### REFERENCE SIGNS LIST

- 111: Low transfer rate (LTR) zone
- 121: Low transfer rate (LTR) zone
- 122: High transfer rate (HTR) zone
- 200: Information recording medium (disc)
- 201: Management information setting unit
- 202: Data unit
- 301: CPU
- 302: ROM
- 303: RAM
- 304: Bus
- 305: Input/output interface
- 306: Input unit
- 307: Output unit
- 308: Storage unit
- 309: Communication unit
- 310: Drive
- 311: Removable medium

## Claims

1. An information processing apparatus comprising a data processing unit (301) configured to
execute a reproduction process of a disc-recorded data,
read disc type information recorded on a disc, wherein the disc type information includes zone setting information by which it is possible to determine whether the disc is a single-zone disc composed of a single transfer rate zone or a plural-zone disc composed of a plurality of different transfer rate zones,
grasp a recorded data configuration on the disc on the basis of the read disc type information, and
execute data readout and reproduction processes at a transfer rate according to the grasped recorded data configuration,
execute, when the disc is a single-zone disc composed of a single transfer rate zone, the data readout and reproduction processes in the entire region of the disc by the same algorithm, and
execute, when the disc is a plural-zone disc composed of a plurality of different transfer rate zones, the data readout and reproduction processes on the individual zones of the disc using different algorithms.

2. The information processing apparatus according to claim 1,
wherein the disc type information further includes information on total recording capacity of the disc, and
the data processing unit (301) is configured to execute the data readout and reproduction processes using an algorithm decided on the basis of the zone setting information and the total disc recording capacity information.

3. The information processing apparatus according to claim 1,
wherein the disc type information is recorded in an index table recorded on the disc, and
the data processing unit (301) is configured to read the disc type information from the index table recorded on the disc.

4. The information processing apparatus according to claim 1, wherein the data processing unit (301) is configured to control the number of disc rotations in accordance with the necessary number of disc rotations calculated on the basis of the disc type information.

5. An information processing apparatus comprising a data processing unit (301) configured to
execute data processing in a disc manufacturing process,
read disc type information included in data recorded on a manufactured disc, wherein the disc type information includes zone setting information by which it is possible to determine whether the disc is a single-zone disc composed of a single transfer rate zone or a plural-zone disc composed of a plurality of different transfer rate zones,
decide the mode of recording data on the disc on the basis of the read disc type information and execute a data recording process on the disc in accordance with the decided mode, the mode indicating recording capacity and transfer rates for respective transfer rate zones,
execute, when the disc is a single-zone disc composed of a single transfer rate zone, a data reproduction test in the entire region of the disc by the same algorithm, and
execute, when the disc is a plural-zone disc composed of a plurality of different transfer rate zones, a data reproduction test in the individual zones of the disc using different algorithms.

6. The information processing apparatus according to claim 5, wherein, at the reproduction test of the data recorded on the manufactured disc, the data processing unit (301) is configured to read the disc type information in the index table recorded on the disc, and execute the reproduction test of the recorded data by an algorithm decided in accordance with the read disc type information.

7. An information processing method comprising
executing a reproduction process of a disc-recorded data,
reading disc type information recorded on a disc, wherein the disc type information includes zone setting information by which it is possible to determine whether the disc is a single-zone disc composed of a single transfer rate zone or a plural-zone disc composed of a plurality of different transfer rate zones,
grasping a recorded data configuration on the disc on the basis of the read disc type information,
executing data readout and reproduction processes at a transfer rate according to the grasped recorded data configuration,
executing, when the disc is a single-zone disc composed of a single transfer rate zone, the data readout and reproduction processes in the entire region of the disc by the same algorithm, and
executing, when the disc is a plural-zone disc composed of a plurality of different transfer rate zones, the data readout and reproduction processes on the individual zones of the disc using different algorithms.

8. An information processing method comprising
executing data processing in a disc manufacturing process,
reading disc type information included in data recorded on a manufactured disc, wherein the disc type information includes zone setting information by which it is possible to determine whether the disc is a single-zone disc composed of a single transfer rate zone or a plural-zone disc composed of a plurality of different transfer rate zones,
deciding the mode of recording data on the disc on the basis of the read disc type information and executing a data recording process on the disc in accordance with the decided mode, the mode indicating recording capacity and transfer rates for respective transfer rate zones,
executing, when the disc is a single-zone disc composed of a single transfer rate zone, a data reproduction test in the entire region of the disc by the same algorithm, and
executing, when the disc is a plural-zone disc composed of a plurality of different transfer rate zones, a data reproduction test in the individual zones of the disc using different algorithms.

9. A program comprising program code means for causing a computer to carry out the steps of the information processing method defined in claim 7 or 8 when said computer program is executed on the computer.

## Patentansprüche

1. Informationsverarbeitungsvorrichtung, umfassend eine Datenverarbeitungseinheit (301), die dazu ausgelegt ist
einen Wiedergabeprozess von auf einer Disc aufgezeichneten Daten auszuführen,
auf einer Disc aufgezeichnete Disc-Typ-Informationen zu lesen, wobei die Disc-Typ-Informationen Zoneneinstellungs-Informationen beinhalten, durch die es möglich ist, zu bestimmen, ob die Disc eine Einzonen-Disc ist, die aus einer einzigen Übertragungsratenzone besteht, oder eine Mehrzonen-Disc ist, die aus mehreren unterschiedlichen Übertragungsratenzonen besteht,
eine aufgezeichnete Datenkonfiguration auf der Disc auf der Basis der gelesenen Disc-Typ-Informationen zu erfassen, und
Datenauslese- und -wiedergabeprozesse mit einer Übertragungsrate gemäß der erfassten aufgezeichneten Datenkonfiguration auszuführen,
wenn die Disc eine Einzonen-Disc ist, die aus einer einzigen Übertragungsratenzone besteht, die Datenauslese- und -wiedergabeprozesse in dem gesamten Bereich der Disc mit dem gleichen Algorithmus auszuführen, und
wenn die Disc eine Mehrzonen-Disc ist, die aus mehreren unterschiedlichen Übertragungsratenzone besteht, die Datenauslese- und -wiedergabeprozesse in den einzelnen Zonen der Disc unter Verwendung unterschiedlicher Algorithmen auszuführen.

2. Informationsverarbeitungsvorrichtung nach Anspruch 1,
wobei die Disc-Typ-Informationen ferner Informationen über die Gesamtaufzeichnungskapazität der Disc beinhalten, und
die Datenverarbeitungseinheit (301) dazu ausgelegt ist, die Datenauslese- und -wiedergabeprozesse unter Verwendung eines Algorithmus auszuführen, der auf der Grundlage der Zoneneinstellinformationen und der Gesamtplattenaufzeichnungskapazitätsinformationen beschlossen wird.

3. Informationsverarbeitungsvorrichtung nach Anspruch 1,
wobei die Disc-Typ-Informationen in einer auf der Disc aufgezeichneten Index-Tabelle aufgezeichnet sind, und die Datenverarbeitungseinheit (301) dazu ausgelegt ist, die Disc-Typ-Informationen aus der auf der Disc aufgezeichneten Index-Tabelle zu lesen.

4. Informationsverarbeitungsvorrichtung nach Anspruch 1, wobei die Datenverarbeitungseinheit (301) dazu ausgelegt ist, die Anzahl der Disc-Drehungen gemäß der auf der Basis der Disc-Typ-Informationen berechneten erforderlichen Anzahl von Disc-Drehungen zu steuern.

5. Informationsverarbeitungsvorrichtung, umfassend eine Datenverarbeitungseinheit (301), die dazu ausgelegt ist
Datenverarbeitung in einem Disc-Herstellungsprozess auszuführen,
Disc-Typ-Informationen zu lesen, die in den auf einer hergestellten Disc aufgezeichneten Daten enthalten sind, wobei die Disc-Typ-Informationen Zoneneinstellungs-Informationen beinhalten, bei denen es möglich ist, zu bestimmen, ob die Disc eine Einzonen-Disc ist, die aus einer einzigen Übertragungsratenzone besteht, oder eine Mehrzonen-Disc ist, die aus mehreren unterschiedlichen Übertragungsratenzonen besteht,
den Modus der Datenaufzeichnung auf der Disc auf der Basis der gelesenen Disc-Typ-Informationen zu beschließen und einen Datenaufzeichnungsprozess auf der Disc in Übereinstimmung mit dem beschlossenen Modus auszuführen, wobei der Modus die Aufzeichnungskapazität und die Übertragungsraten für die jeweiligen Übertragungsratenzonen angibt,
wenn die Disc eine Einzonen-Disc ist, die aus einer einzigen Übertragungsratenzone besteht, einen Datenwiedergabetest in dem gesamten Bereich der Disc mit dem gleichen Algorithmus auszuführen, und
wenn die Disc eine Mehrzonen-Disc ist, die aus mehreren unterschiedlichen Übertragungsratenzonen besteht, einen Datenwiedergabetest in den einzelnen Zonen der Disc unter Verwendung unterschiedlicher Algorithmen auszuführen.

6. Informationsverarbeitungsvorrichtung nach Anspruch 5, wobei die Datenverarbeitungseinheit (301) dazu ausgelegt ist, bei dem Wiedergabetest der auf der hergestellten Disc aufgezeichneten Daten die Disc-Typ-Informationen in der auf der Disc aufgezeichneten Index-Tabelle zu lesen und den Wiedergabetest der aufgezeichneten Daten durch einen Algorithmus auszuführen, der in Übereinstimmung mit den gelesenen Disc-Typ-Informationen beschlossen wird.

7. Informationsverarbeitungsverfahren, umfassend Ausführen eines Wiedergabeprozesses von auf einer Disc aufgezeichneten Daten,
Lesen von auf einer Disc aufgezeichneten Disc-Typ-Informationen, wobei die Disc-Typ-Informationen Zoneneinstellungs-Informationen beinhalten, durch die es möglich ist, zu bestimmen, ob die Disc eine Einzonen-Disc ist, die aus einer einzigen Übertragungsratenzone besteht, oder eine Mehrzonen-Disc ist, die aus mehreren unterschiedlichen Übertragungsratenzonen besteht,
Erfassen einer aufgezeichneten Datenkonfiguration auf der Disc auf der Basis der gelesenen Disc-Typ-Informationen,
Ausführen von Datenauslese- und -wiedergabeprozessen mit einer Übertragungsrate gemäß der aufgezeichneten Datenkonfiguration,
Ausführen, wenn die Disc eine Einzonen-Disc ist, die aus einer einzigen Übertragungsratenzone besteht, der Datenauslese- und -wiedergabeprozesse in dem gesamten Bereich der Disc mit dem gleichen Algorithmus, und
Ausführen, wenn die Disc eine Mehrzonen-Disc ist, die aus mehreren unterschiedlichen Übertragungsratenzone besteht, die Datenauslese- und -wiedergabeprozesse in den einzelnen Zonen der Disc unter Verwendung unterschiedlicher Algorithmen.

8. Informationsverarbeitungsverfahren, umfassend Ausführen der Datenverarbeitung in einem Disc-Herstellungsprozess,
Lesen der Disc-Typ-Informationen, die in den auf einer hergestellten Disc aufgezeichneten Daten enthalten sind, wobei die Disc-Typ-Informationen Zoneneinstellungs-Informationen beinhalten, durch die es möglich ist, zu bestimmen, ob die Disc eine Einzonen-Disc ist, die aus einer einzigen Übertragungsratenzone besteht, oder eine Mehrzonen-Disc ist, die aus mehreren unterschiedlichen Übertragungsratenzonen besteht,
Beschließen des Modus der Datenaufzeichnung auf der Disc auf der Basis der gelesenen Disc-Typ-Informationen und Ausführen eines Datenaufzeichnungsprozesses auf der Disc in Übereinstimmung mit dem beschlossenen Modus, wobei der Modus die Aufzeichnungskapazität und die Übertragungsraten für die jeweiligen Übertragungsratenzonen angibt,
Ausführen, wenn die Disc eine Einzonen-Disc ist, die aus einer einzigen Übertragungsratenzone besteht, eines Datenwiedergabetests in dem gesamten Bereich der Disc mit dem gleichen Algorithmus, und
Ausführen, wenn die Disc eine Mehrzonen-Disc ist, die aus mehreren unterschiedlichen Übertragungsratenzonen besteht, einen Datenwiedergabe-Test in den einzelnen Zonen der Disc unter Verwendung unterschiedlicher Algorithmen.

9. Programm, das Programmcodemittel umfasst, um einen Computer zu veranlassen, die Schritte des in Anspruch 7 oder 8 definierten Informationsverarbeitungsverfahrens durchzuführen, wenn das Computerprogramm auf dem Computer ausgeführt wird.

## Revendications

1. Appareil de traitement d'informations comprenant une unité de traitement de données (301) configuré pour exécuter un processus de reproduction de données enregistrées sur disque,
lire des informations de type de disque enregistrées sur un disque, les informations de type de disque comportant des informations de configuration de zones permettant de déterminer que le disque est un disque mono-zone composé d'une zone à une seule vitesse de transfert ou un disque multi-zones composé d'une pluralité de zones à différentes vitesses de transfert, choisir une configuration de données enregistrées sur le disque en fonction des informations de type de disque lues, et
exécuter des processus de lecture et de reproduction de données à une vitesse de transfert conforme à la configuration de données enregistrées choisie, exécuter, quand le disque est un disque mono-zone composé d'une zone à une seule vitesse de transfert, les processus de lecture et de reproduction de données dans toute la région du disque par le même algorithme, et
exécuter, quand le disque est un disque multi-zones composé d'une pluralité de zones à différentes vitesses de transfert, les processus de lecture et de reproduction sur les zones individuelles du disque à l'aide de différents algorithmes.

2. Appareil de traitement d'informations selon la revendication 1,
dans lequel les informations de type de disque comportent en outre des informations sur la capacité d'enregistrement total du disque, et
l'unité de traitement de données (301) est configurée pour exécuter les processus de lecture et de reproduction de données à l'aide d'un algorithme décidé en fonction des informations de configuration de zone et des informations de capacité d'enregistrement totale du disque.

3. Appareil de traitement d'informations selon la revendication 1,
dans lequel les informations de type de disque sont enregistrées dans une table indexée enregistrée sur le disque, et
l'unité de traitement de données (301) est configurée pour lire les informations de type de disque à partir de la table indexée enregistrée sur le disque.

4. Appareil de traitement d'informations selon la revendication 1, dans lequel l'unité de traitement de données (301) est configurée pour commander le nombre de rotations de disque conformément au nombre nécessaire de rotations de disque calculé en fonction des informations de type de disque.

5. Appareil de traitement d'informations comprenant une unité de traitement de données (301) configurée pour
exécuter un traitement de données dans un processus de fabrication de disque,
lire des informations de type de disque incluses dans des données enregistrées sur un disque fabriqué, les informations de type de disque comportant des informations de configuration de zones permettant de déterminer que le disque est un disque mono-zone composé d'une zone à une seule vitesse de transfert ou un disque multi-zones composé d'une pluralité de zones à différentes vitesses de transfert,
décider le mode d'enregistrement de données sur le disque en fonction des informations de type de disque lues et exécuter un processus d'enregistrement de données sur le disque conformément au mode décidé, le mode indiquant la capacité d'enregistrement et les vitesses de transfert de zones à vitesse de transfert respectives,
exécuter, quand le disque est un disque mono-zone composé d'une zone à une seule vitesse de transfert, un test de reproduction de données dans toute la région du disque par le même algorithme, et
exécuter, quand le disque est un disque multi-zones composé d'une pluralité de zones à différentes vitesses de transfert, un test de reproduction de données dans les zones individuelles du disque à l'aide de différents algorithmes.

6. Appareil de traitement d'informations selon la revendication 5, dans lequel, lors du test de reproduction des données enregistrées sur le disque fabriqué, l'unité de traitement de données (301) est configurée pour lire les informations de type de disque dans la table indexée enregistrée sur le disque et exécuter le test de reproduction des données enregistrées par un algorithme décidé conformément aux informations de type de disque lues.

7. Procédé de traitement d'informations comprenant l'exécution d'un processus de reproduction de données enregistrées sur disque,
la lecture d'informations de type de disque enregistrées sur un disque, les informations de type de disque comportant des informations de configuration de zones permettant de déterminer que le disque est un disque mono-zone composé d'une zone à une seule vitesse de transfert ou un disque multi-zones composé d'une pluralité de zones à différentes vitesses de transfert, le choix d'une configuration de données enregistrées sur le disque en fonction des informations de type de disque lues, et
l'exécution de processus de lecture et de reproduction de données à une vitesse de transfert conforme à la configuration de données enregistrées choisie,
l'exécution, quand le disque est un disque mono-zone composé d'une zone à une seule vitesse de transfert, des processus de lecture et de reproduction de données dans toute la région du disque par le même algorithme, et
l'exécution, quand le disque est un disque multi-zones composé d'une pluralité de zones à différentes vitesses de transfert, des processus de lecture et de reproduction sur les zones individuelles du disque à l'aide de différents algorithmes.

8. Procédé de traitement d'informations comprenant l'exécution d'un traitement de données dans un processus de fabrication de disque,
la lecture d'informations de type de disque incluses dans des données enregistrées sur un disque fabriqué, les informations de type de disque comportant des informations de configuration de zones par lesquels il est possible de déterminer que le disque est un disque mono-zone composé d'une zone à une seule vitesse de transfert ou un disque multi-zones composé d'une pluralité de zones à différentes vitesses de transfert, la décision du mode d'enregistrement de données sur le disque en fonction des informations de type de disque lues et exécuter un processus d'enregistrement de données sur le disque conformément au mode décidé, le mode indiquant la capacité d'enregistrement et les vitesses de transfert de zones à vitesse de transfert respectives,
l'exécution, quand le disque est un disque mono-zone composé d'une zone à une seule vitesse de transfert, un test de reproduction de données dans toute la région du disque par le même algorithme, et
l'exécution, quand le disque est un disque multi-zones composé d'une pluralité de zones à différentes vitesses de transfert, d'un test de reproduction de données dans les zones individuelles du disque à l'aide de différents algorithmes.

9. Programme comprenant des moyens de code de programme pour amener un ordinateur à réaliser les étapes du procédé de traitement d'informations défini à la revendication 7 ou 8 quand ledit programme d'ordinateur est exécuté sur l'ordinateur.
